# DEMANDE DE BREVET EUROPEEN

(11) **EP 4 623 765 A1**
(43) Date de publication de la demande: **01.10.2025**
(21) Numéro de dépôt: 25158591.5
(22) Date de dépôt: 18.02.2025
(51) Int. Cl.: A47J 27/21, A47J 31/06, A47J 31/20

(54) **MACHINE À INFUSER ÉLECTRIQUE COMPRENANT UN ACCESSOIRE D'INFUSION ÉQUIPÉ D'UN DISPOSITIF DE PRÉHENSION MOBILE**

(30) Priorité: 27.03.2024 FR 2403082
(71) Demandeur: SEB S.A., 69130 Ecully (FR)
(72) Inventeur: ALLEMAND, Bernard, 69134 Ecully Cedex (FR); MANSEAU, Charles, 69134 Ecully Cedex (FR); SMAL, Chloé, 69134 Ecully Cedex (FR)
(74) Mandataire: Germain Maureau

(57) **Abrégé**

La machine à infuser électrique comprend un contenant (4) délimitant un volume interne (5) ; un accessoire d'infusion (39) comprenant un corps principal (41) configuré pour être disposé dans le volume interne (5) et délimitant un volume d'infusion (43) configuré pour contenir un produit à infuser, et un dispositif de préhension fixé à une partie supérieure du corps principal (41) ; et un couvercle (11) configuré pour fermer le contenant (4) et recouvrir l'accessoire d'infusion. Le dispositif de préhension (49) est monté mobile par rapport au corps principal (41) entre une configuration relevée et une configuration abaissée, et le couvercle (11) est configuré pour exercer une force d'appui contre le dispositif de préhension (49) de manière à maintenir le dispositif de préhension (49) dans la configuration abaissée.

## Description

### Domaine technique

La présente invention concerne le domaine des machines à infuser électriques, et en particulier des bouilloires électriques et des théières électriques.

### Etat de la technique

Une machine à infuser électrique comprend de façon connue :
- un contenant délimitant un volume interne destiné à contenir de l'eau et dans lequel l'eau est destinée à être chauffée et notamment portée à ébullition,
- une poignée de préhension fixée au contenant,
- un bec verseur situé à l'opposé de la poignée de préhension par rapport à un axe longitudinal central du contenant,
- un accessoire d'infusion, tel qu'un panier à infuser, comprenant un corps principal configuré pour reposer sur une partie de retenue prévue sur le contenant et pour être disposé au moins en partie dans le volume interne du contenant, le corps principal délimitant un volume d'infusion configuré pour contenir un produit à infuser, et comportant une ouverture supérieure à travers laquelle le produit à infuser est apte à être introduit dans le volume d'infusion, et
- un couvercle configuré pour recouvrir l'accessoire d'infusion et pour fermer le contenant.

Afin de faciliter le retrait de l'accessoire d'infusion hors du contenant, l'accessoire d'infusion peut être avantageusement pourvu d'une partie de préhension apte à s'étendre à l'extérieur du contenant et à être manipulée par un utilisateur.

Cependant, une telle configuration de l'accessoire d'infusion augmente sensiblement les risques d'écoulement d'eau bouillante à l'extérieur du contenant par exemple en cas de renversement du contenant (en raison du fait que la partie de préhension s'étend entre le couvercle et l'ouverture de remplissage supérieure du contenant), sauf à équiper le couvercle d'un joint d'étanchéité ayant une structure complexe et onéreuse.

Pour pallier un tel inconvénient, la partie de préhension, équipant l'accessoire d'infusion, pourrait être configurée pour être intégralement disposée dans le volume interne délimité par le contenant, et donc pour être située sous le couvercle.

Toutefois, afin d'une part de limiter la contamination de l'eau par d'éventuels contaminants présents sur la partie de préhension et d'autre part de limiter les risques de brûlure d'un utilisateur lors du retrait de l'accessoire d'infusion hors du contenant, il est préférable que la partie de préhension équipant l'accessoire d'infusion puisse être maintenue en dehors de l'eau contenue dans le contenant, y compris lorsque ce dernier est rempli jusqu'à son niveau de remplissage maximal.

Or, afin de respecter les deux critères précités avec un accessoire d'infusion équipé d'une partie de préhension disposée dans une partie supérieure de l'accessoire d'infusion et destinée à être située intégralement sous le couvercle, il est nécessaire soit d'augmenter la hauteur du contenant, ce qui nuit à l'encombrement en hauteur de ce dernier, soit de réduire la taille de la partie de préhension, ce qui nuit à la maniabilité de l'accessoire d'infusion.

### Résumé de l'invention

La présente invention vise à remédier à tout ou partie de ces inconvénients.

Le problème technique à la base de l'invention consiste notamment à fournir une machine à infuser électrique qui soit de structure simple, ergonomique et économique, tout en présentant une grande sécurité d'utilisation.

A cet effet, la présente invention concerne une machine à infuser électrique, et en particulier une bouilloire électrique ou une théière électrique, comprenant :
- un contenant délimitant un volume interne destiné à contenir de l'eau et dans lequel l'eau est destinée à être chauffée,
- une poignée de préhension fixée au contenant,
- un bec verseur,
- un accessoire d'infusion, tel qu'un panier à infuser, comprenant :
   ∘ un corps principal configuré pour reposer sur une partie de retenue prévue sur le contenant et pour être disposé au moins en partie dans le volume interne du contenant, le corps principal délimitant un volume d'infusion configuré pour contenir un produit à infuser, tel que du thé, du café ou des plantes, et
   ∘ un dispositif de préhension fixé à une partie supérieure du corps principal et comprenant une partie de préhension configurée pour permettre à un utilisateur de manipuler l'accessoire d'infusion, et par exemple de retirer l'accessoire d'infusion hors du contenant, et
- un couvercle configuré pour occuper une position de fermeture dans laquelle le couvercle ferme le contenant et recouvre au moins en partie, et par exemple intégralement, l'accessoire d'infusion, le couvercle comprenant une face inférieure configurée pour être située en regard de l'accessoire d'infusion,
le dispositif de préhension est monté mobile par rapport au corps principal entre une configuration relevée dans laquelle la partie de préhension est apte à être manipulée par un utilisateur et une configuration abaissée, et, lorsque le couvercle est dans la position de fermeture, le couvercle est configuré pour exercer une force d'appui contre le dispositif de préhension, et par exemple contre la partie de préhension, de manière à maintenir le dispositif de préhension dans la configuration abaissée.

Une telle configuration du dispositif de préhension, et en particulier le fait qu'il soit déplaçable entre une configuration abaissée et une configuration relevée, permet de limiter l'encombrement en hauteur de l'accessoire d'infusion lorsque ce dernier est disposé dans le volume interne et que le couvercle occupe la position de fermeture, tout en assurant une manipulation aisée de l'accessoire d'infusion notamment lors d'une phase de retrait de l'accessoire d'infusion hors du contenant. En outre, une tel agencement de l'accessoire d'infusion permet de garantir une bonne étanchéité de la machine à infuser électrique lorsque le couvercle est en position de fermeture.

La machine à infuser électrique peut en outre présenter une ou plusieurs des caractéristiques suivantes, prises seules ou en combinaison.

Selon un mode de réalisation de l'invention, l'accessoire d'infusion comporte un dispositif de sollicitation configuré pour solliciter élastiquement le dispositif de préhension vers la configuration relevée. La présence d'un tel dispositif de sollicitation permet, après un retrait du couvercle, de faciliter la préhension de la partie de préhension par un utilisateur en vue du retrait de l'accessoire d'infusion hors du volume interne, et également d'éloigner la partie de préhension du volume interne pouvant contenir de l'eau bouillante et donc de limiter les risques de brûlure de l'utilisateur.

Selon un mode de réalisation de l'invention, le dispositif de sollicitation est fixé au corps principal.

Selon un mode de réalisation de l'invention, le dispositif de sollicitation est situé en regard d'une face inférieure de la partie d'appui.

Selon un mode de réalisation de l'invention, le dispositif de préhension est configuré pour occuper une configuration intermédiaire située entre la configuration abaissée et la configuration relevée, le dispositif de sollicitation étant configuré pour solliciter le dispositif de préhension dans la configuration intermédiaire.

Selon un mode de réalisation de l'invention, le couvercle est configuré pour déplacer le dispositif de préhension dans la configuration abaissée lorsque le couvercle est déplacé dans la position de fermeture.

Selon un mode de réalisation de l'invention, le contenant présente un axe longitudinal central, et le bec verseur est configuré pour être situé à l'opposé de la poignée de préhension par rapport à l'axe longitudinal central du contenant.

Selon un mode de réalisation de l'invention, le dispositif de préhension est configuré pour être situé en regard de la face inférieure du couvercle lorsque le couvercle occupe la position de fermeture.

Selon un mode de réalisation de l'invention, le corps principal comporte une ouverture supérieure à travers laquelle le produit à infuser est apte à être introduit dans le volume d'infusion.

Selon un mode de réalisation de l'invention, la partie de préhension est configurée pour être décalée par rapport à l'ouverture supérieure lorsque le dispositif de préhension occupe la configuration abaissée, et pour être située en regard de l'ouverture supérieure lorsque le dispositif de préhension occupe la configuration relevée. Une telle configuration du dispositif de préhension assure une introduction aisée du produit à infuser dans le volume d'infusion (et également un retrait aisé du produit infusé hors du volume d'infusion), ainsi qu'un transport stable de l'accessoire d'infusion lorsque le volume d'infusion est rempli.

Selon un mode de réalisation de l'invention, le corps principal comporte une partie d'appui configurée pour reposer sur la partie de retenue prévue sur le contenant, la partie de préhension étant configurée pour être éloignée de la partie d'appui lorsque le dispositif de préhension occupe la configuration relevée et pour être rapprochée de la partie d'appui lorsque le dispositif de préhension occupe la configuration abaissée.

Selon un mode de réalisation de l'invention, la partie d'appui est sensiblement plane.

Selon un mode de réalisation de l'invention, la partie d'appui s'étend au niveau de l'ouverture supérieure du corps principal.

Selon un mode de réalisation de l'invention, la partie d'appui est configurée pour s'étendre sensiblement perpendiculairement à un axe longitudinal central du contenant lorsque la partie d'appui repose sur la partie de retenue.

Selon un mode de réalisation de l'invention, le dispositif de préhension est monté mobile sur la partie d'appui.

Selon un mode de réalisation de l'invention, le corps principal comporte une partie d'infusion délimitant le volume d'infusion. De façon avantageuse, la partie d'infusion présente une forme globalement cylindrique.

Selon un mode de réalisation de l'invention, le dispositif de sollicitation comporte au moins une lame élastiquement déformable fixée au corps principal, et par exemple à la partie d'appui, et configurée pour solliciter le dispositif de préhension vers la configuration relevée.

Selon un mode de réalisation de l'invention, l'au moins une lame élastiquement déformable s'étend en regard d'une face inférieure de la partie d'appui.

Selon un mode de réalisation de l'invention, le dispositif de préhension comporte au moins une partie d'actionnement, tel qu'un doigt d'actionnement ou un ergot d'actionnement, configurée pour faire saillie à travers un orifice traversant respectif prévu sur la partie d'appui et pour coopérer avec le dispositif de sollicitation, et par exemple avec la face supérieure de l'au moins une lame élastiquement déformable, lorsque le dispositif de préhension occupe la configuration abaissée.

Selon un mode de réalisation de l'invention, le dispositif de sollicitation comporte deux lames élastiquement déformables disposées de part et d'autre d'un plan vertical médian de la machine à infuser électrique qui passe par la poignée de préhension, et par exemple sensiblement de part et d'autre de l'ouverture supérieure.

Selon un autre mode de réalisation de l'invention, le dispositif de sollicitation comporte au moins une lame élastiquement déformable fixée au dispositif de préhension.

Selon un mode de réalisation de l'invention, la face inférieure du couvercle comprend une surface d'appui configurée pour exercer une force d'appui sur le dispositif de préhension lorsque le couvercle est dans la position de fermeture, de manière à maintenir le dispositif de préhension dans la configuration abaissée.

Selon un mode de réalisation de l'invention, la surface d'appui est sensiblement plane.

Selon un mode de réalisation de l'invention, la surface d'appui est configurée pour s'étendre sensiblement horizontalement lorsque le contenant repose sur une surface horizontale.

Selon un mode de réalisation de l'invention, le dispositif de préhension comporte deux parties de montage latérales qui sont situées à distance l'une de l'autre et qui sont montées mobiles sur le corps principal, la partie de préhension reliant les deux parties de montage latérales l'une à l'autre.

Selon un mode de réalisation de l'invention, le dispositif de préhension est une anse de préhension.

Selon un mode de réalisation de l'invention, le dispositif de préhension est monté articulé par rapport au corps principal autour d'un axe d'articulation et entre la configuration abaissée et la configuration relevée.

Selon un mode de réalisation de l'invention, les deux parties de montage latérales sont montées articulées sur le corps principal par l'intermédiaire de deux liaisons pivots définissant l'axe d'articulation.

Selon un mode de réalisation de l'invention, l'axe d'articulation est configuré pour s'étendre sensiblement perpendiculairement à un axe longitudinal central du contenant lorsque l'accessoire d'infusion repose sur la partie de retenue.

Selon un mode de réalisation de l'invention, l'axe d'articulation est configuré pour s'étendre sensiblement horizontalement lorsque le contenant repose sur une surface horizontale

Selon un mode de réalisation de l'invention, l'axe d'articulation est configuré pour s'étendre au-dessus et en travers de l'ouverture supérieure.

Selon un mode de réalisation de l'invention, le dispositif de préhension comporte un revêtement d'isolation thermique, tel qu'un manchon d'isolation thermique, s'étendant autour de la partie de préhension.

Selon un mode de réalisation de l'invention, le couvercle comporte une paroi d'obstruction faisant saillie depuis la face inférieure du couvercle et configurée pour être insérée dans l'ouverture supérieure prévue sur le corps principal de manière à faire obstacle à une sortie du produit à infuser hors du volume d'infusion.

Selon un mode de réalisation de l'invention, la paroi d'obstruction présente une forme globalement cylindrique, et présente par exemple une section transversale de forme circulaire.

Selon un mode de réalisation de l'invention, l'accessoire d'infusion est amovible par rapport au contenant.

Selon un mode de réalisation de l'invention, la machine à infuser électrique comporte un dispositif d'indexage angulaire, également nommé dispositif de détrompage, configuré pour indexer angulairement l'accessoire d'infusion par rapport au contenant, de manière à définir une unique position de retenue de l'accessoire d'infusion sur le contenant.

Selon un mode de réalisation de l'invention, le dispositif d'indexage angulaire comporte au moins un élément d'indexage prévu sur le contenant, et au moins un organe d'indexage correspondant prévu sur le corps principal et configuré pour coopérer avec l'au moins élément d'indexage lorsque l'accessoire d'infusion repose sur la partie de retenue.

Selon un mode de réalisation de l'invention, la machine à infuser électrique comporte un circuit d'évacuation de vapeur configuré pour convoyer, à l'extérieur du volume interne et par exemple vers l'extérieur de la machine à infuser électrique, de la vapeur générée dans le volume interne lors d'une ébullition de l'eau contenue dans le volume interne.

Selon un mode de réalisation de l'invention, le circuit d'évacuation de vapeur comporte :
- un premier orifice d'admission de vapeur et un deuxième orifice d'admission de vapeur qui sont prévus sur le couvercle et qui débouchent dans la face inférieure du couvercle, les premier et deuxième orifices d'admission de vapeur étant configurés pour être reliés fluidiquement au volume interne délimité par le contenant, et par exemple pour être situés au-dessus d'un niveau de remplissage maximal du contenant, et pour être disposés de part et d'autre d'un plan vertical médian de la machine à infuser électrique qui passe par la poignée de préhension,
- une chambre interne délimitée par le couvercle, et
- un premier conduit d'écoulement de vapeur comprenant une première ouverture d'entrée de vapeur reliée fluidiquement au premier orifice d'admission de vapeur et une première ouverture de sortie de vapeur débouchant dans la chambre interne, et un deuxième conduit d'écoulement de vapeur comprenant une deuxième ouverture d'entrée de vapeur reliée fluidiquement au deuxième orifice d'admission de vapeur et une deuxième ouverture de sortie de vapeur débouchant dans la chambre interne.

Selon un mode de réalisation de l'invention, les premier et deuxième conduits d'écoulement de vapeur forment un dispositif anti-déversement, également nommé dispositif anti-débordement, configuré pour empêcher un déversement de l'eau contenue dans le volume interne via le circuit d'évacuation de vapeur lorsque la machine à infuser électrique est renversée.

Selon un mode de réalisation de l'invention, le circuit d'évacuation de vapeur comporte au moins une ouverture d'évacuation de vapeur, et par exemple une ou plusieurs ouverture(s) d'évacuation de vapeur, prévue sur le couvercle et reliée fluidiquement à la chambre interne délimitée par le couvercle, l'au moins une ouverture d'évacuation de vapeur étant configurée pour permettre une évacuation de la vapeur contenue dans la chambre interne à l'extérieur du couvercle et par exemple vers l'extérieur de la machine à infuser électrique.

Selon un mode de réalisation de l'invention, l'au moins une ouverture d'évacuation de vapeur est configurée pour être située à proximité du bec verseur.

Selon un mode de réalisation de l'invention, la machine à infuser électrique est configurée de telle sorte que, lorsque la machine à infuser électrique est renversée et que la poignée de préhension et un premier côté latéral du contenant reposent de manière stable sur une surface horizontale, le premier orifice d'admission de vapeur est situé au-dessus du niveau d'eau dans le volume interne, et de telle sorte que, lorsque la machine à infuser électrique est renversée et que la poignée de préhension et un deuxième côté latéral du contenant reposent de manière stable sur une surface horizontale, le deuxième orifice d'admission de vapeur est situé au-dessus du niveau d'eau dans le volume interne. Ainsi, la machine à infuser électrique selon la présente invention permet d'éviter ou du moins de limiter considérablement les risques d'écoulement d'eau bouillante hors de la machine à infuser électrique en cas de renversement de cette dernière.

Selon un mode de réalisation de l'invention, la machine à infuser électrique est configurée de telle sorte que, lorsque la machine à infuser électrique est renversée et que la poignée de préhension et un premier côté latéral du contenant reposent de manière stable sur une surface horizontale, le premier orifice d'admission de vapeur et la deuxième ouverture de sortie de vapeur sont situés au-dessus du niveau d'eau dans le volume interne, et de telle sorte que, lorsque la machine à infuser électrique est renversée et que la poignée de préhension et un deuxième côté latéral du contenant reposent de manière stable sur une surface horizontale, le deuxième orifice d'admission de vapeur et la première ouverture de sortie de vapeur sont situés au-dessus du niveau d'eau dans le volume interne.

Selon un mode de réalisation de l'invention, les première et deuxième ouvertures de sortie de vapeur sont configurées pour être disposées de part et d'autre du plan vertical médian de la machine à infuser électrique.

Selon un autre mode de réalisation de l'invention, les première et deuxième ouvertures de sortie de vapeur sont situées dans une moitié arrière de la chambre interne. Une telle disposition des première et deuxième ouvertures de sortie de vapeur limite les risques d'écoulement d'eau dans le couvercle (via les premier et deuxième orifices d'admission de vapeur et les premier et deuxième conduits d'écoulement de vapeur) lorsqu'un utilisateur verse de l'eau bouillante dans un récipient en inclinant vers l'avant et vers le bas la machine à infuser électrique. En outre, lorsque la machine à infuser électrique comprend un système de contrôle électromécanique, une telle architecture permet de faciliter le transfert de la vapeur vers la poignée de préhension et vers un système de contrôle électromécanique de la machine à infuser électrique situé en partie basse et propre à désactiver la chauffe de la machine à infuser électrique lorsqu'il détecte de la vapeur.

Selon un mode de réalisation de l'invention, les première et deuxième ouvertures de sortie de vapeur sont configurées pour être orientées à l'opposé du bec verseur, c'est-à-dire vers l'arrière de la machine à infuser électrique. Ces dispositions limitent encore les risques d'écoulement d'eau dans le couvercle (via les premier et deuxième orifices d'admission de vapeur et les premier et deuxième conduits d'écoulement de vapeur) lorsqu'un utilisateur verse de l'eau bouillante dans un récipient en inclinant vers l'avant et vers le bas la machine à infuser électrique.

Selon un mode de réalisation de l'invention, chacun des premier et deuxième conduits d'écoulement de vapeur est flexible.

Selon un mode de réalisation de l'invention, les premier et deuxième conduits d'écoulement de vapeur sont logés dans la chambre interne délimitée par le couvercle.

Selon un mode de réalisation de l'invention, les premier et deuxième orifices d'admission de vapeur sont situés dans une moitié avant de la face inférieure du couvercle.

Selon un mode de réalisation de l'invention, les premier et deuxième orifices d'admission de vapeur sont situés à proximité d'un bord périphérique de la face inférieure du couvercle. Une telle disposition des premier et deuxième orifices d'admission de vapeur limite encore les risques d'écoulement d'eau bouillante hors de la machine à infuser électrique en cas de renversement de cette dernière.

Selon un mode de réalisation de l'invention, le contenant comprend une ouverture de remplissage supérieure débouchant dans le volume interne.

Selon un mode de réalisation de l'invention, le couvercle est configuré pour être agencé au niveau de l'ouverture de remplissage supérieure.

Selon un mode de réalisation de l'invention, le contenant comporte le bec verseur.

Selon un mode de réalisation de l'invention, le couvercle est amovible par rapport au contenant.

Selon un mode de réalisation de l'invention, la machine à infuser électrique comporte un dispositif de fixation configuré pour fixer de manière amovible, c'est-à-dire de manière temporaire et réversible, le couvercle au contenant.

Selon un mode de réalisation de l'invention, le dispositif de fixation comprend au moins un organe de fixation, tel qu'une patte de fixation ou un doigt de fixation, prévu sur le couvercle et au moins un élément de fixation, tel qu'un logement de fixation, prévu sur le contenant, l'au moins un organe de fixation étant configuré pour occuper une position de fixation dans laquelle l'au moins un organe de fixation est configuré pour coopérer avec l'au moins un élément de fixation de manière à fixer le couvercle au contenant, et une position de libération dans laquelle l'au moins un organe de fixation est configuré pour libérer l'au moins un élément de fixation de telle sorte que le couvercle peut être retiré du contenant.

Selon un mode de réalisation de l'invention, l'au moins un organe de fixation est monté mobile par rapport au couvercle entre la position de fixation et la position de libération.

Selon un mode de réalisation de l'invention, le dispositif de fixation comporte un organe de rappel, tel qu'un ressort de rappel, configuré pour rappeler l'au moins un organe de fixation dans la position de fixation.

Selon un mode de réalisation de l'invention, la machine à infuser électrique comporte un mécanisme d'actionnement prévu sur le couvercle et configuré pour déplacer l'au moins organe de fixation dans la position de libération lorsque le mécanisme d'actionnement est actionné par un utilisateur.

Selon un mode de réalisation de l'invention, le mécanisme d'actionnement comporte un organe d'actionnement qui est actionnable manuellement par un utilisateur et qui est configuré pour déplacer l'au moins un organe de fixation de la position de fixation à la position de libération, l'organe d'actionnement étant monté mobile entre une première position d'actionnement et une deuxième position d'actionnement, l'organe d'actionnement et l'au moins un organe de fixation étant configurés de telle sorte qu'un déplacement de l'organe d'actionnement de la première position d'actionnement à la deuxième position d'actionnement entraîne un déplacement de l'au moins un organe de fixation de la position de fixation à la position de libération. Une telle configuration du mécanisme d'actionnement permet à un utilisateur de pouvoir déposer le couvercle par un simple actionnement du mécanisme d'actionnement.

Selon un mode de réalisation de l'invention, le couvercle comporte un conduit de versage configuré pour convoyer vers le bec verseur de l'eau contenue dans le volume interne, la machine à infuser électrique comprenant un obturateur monté mobile sur le couvercle entre une position d'obturation dans laquelle l'obturateur obture le conduit de versage et empêche un écoulement d'eau à travers le conduit de versage et une position d'ouverture dans laquelle l'obturateur libère le conduit de versage et autorise un écoulement d'eau à travers le conduit de versage. Une telle configuration du couvercle limite considérablement les risques d'écoulement d'eau à travers le bec verseur lorsque la machine à infuser électrique est renversée.

Selon un mode de réalisation de l'invention, le conduit de versage comporte une ouverture d'entrée d'eau débouchant dans la face inférieure du couvercle et une ouverture de sortie d'eau débouchant dans une surface périphérique externe du couvercle.

Selon un mode de réalisation de l'invention, l'au moins une ouverture d'évacuation de vapeur est située à proximité de l'ouverture de sortie d'eau.

Selon un mode de réalisation de l'invention, la machine à infuser électrique comporte un système d'actionnement prévu sur le couvercle et configuré pour déplacer l'obturateur entre la position d'ouverture et la position d'obturation.

Selon un mode de réalisation de l'invention, le système d'actionnement comporte un bouton d'actionnement actionnable par un utilisateur et mobile entre une première position de bouton et une deuxième position de bouton, le système d'actionnement étant configuré de telle sorte qu'un déplacement, par un utilisateur, du bouton d'actionnement de la première position de bouton à la deuxième position de bouton entraîne un déplacement de l'obturateur de la position d'obturation à la position d'ouverture.

Selon un mode de réalisation de l'invention, le système d'actionnement comporte un dispositif de commande bistable, par exemple du type stylo à bille, configuré de telle sorte qu'un déplacement, par un utilisateur, du bouton d'actionnement de la première position de bouton à la deuxième position de bouton entraîne un déplacement de l'obturateur de la position d'obturation à la position d'ouverture, et de telle sorte qu'un déplacement, par un utilisateur, du bouton d'actionnement de la deuxième position de bouton à la première position de bouton entraîne un déplacement de l'obturateur de la position d'ouverture à la position d'obturation.

Selon un mode de réalisation de l'invention, le contenant comporte un fond chauffant situé sous le volume interne et configuré pour chauffer l'eau contenue dans le volume interne.

Selon un mode de réalisation de l'invention, les premier et deuxième conduits d'écoulement de vapeur sont formés respectivement par des premier et deuxième tubes d'écoulement de vapeur. De façon avantageuse, chacun des premier et deuxième tubes d'écoulement de vapeur est formé d'un seul tenant et est monobloc.

### Brève description des figures

L'invention sera mieux comprise à l'aide de la description qui suit en référence aux dessins schématiques annexés représentant, à titre d'exemple non limitatif, une forme d'exécution de cette machine à infuser électrique.
Figure 1 est une vue en perspective de dessus d'une machine à infuser électrique selon l'invention.
Figure 2 est une vue partielle en perspective de dessus de la machine à infuser électrique de la figure 1.
Figure 3 est une vue partielle en perspective de dessus d'un contenant appartenant à la machine à infuser électrique de la figure 1.
Figure 4 est une vue en coupe longitudinale de la machine à infuser électrique de la figure 1.
Figure 5 est une vue, à l'échelle agrandie, d'un détail de la figure 4.
Figure 6 est une vue en perspective de dessus d'un couvercle de la machine à infuser électrique de la figure 1.
Figure 7 est une vue en perspective de dessus du couvercle de la figure 6.
Figure 8 est une vue en perspective de dessous du couvercle de la figure 6.
Figure 9 est une vue partielle en perspective de dessus du couvercle de la figure 6.
Figure 10 est une vue partielle en perspective de dessus du couvercle de la figure 6.
Figure 11 est une vue de dessus d'un accessoire d'infusion appartenant à la machine à infuser électrique de la figure 1.
Figure 12 est une vue en perspective de dessus de l'accessoire d'infusion de la figure 11.
Figure 13 est une vue en perspective de dessous de l'accessoire d'infusion de la figure 11.
Figure 14 est une vue partielle de côté de la machine à infuser électrique de la figure 1 montrant la machine à infuser électrique renversée sur une surface horizontale et occupant une position stable dans laquelle une poignée de préhension de la machine à infuser électrique et le côté latéral gauche du contenant prennent appui sur la surface horizontale.
Figure 15 est une vue partielle de côté de la machine à infuser électrique de la figure 1 montrant la machine à infuser électrique renversée sur une surface horizontale et occupant une position stable dans laquelle une poignée de préhension de la machine à infuser électrique et le côté latéral droit du contenant prennent appui sur la surface horizontale.

### Description détaillée

On notera que dans ce document, les termes « horizontal », « vertical », « inférieur », « supérieur », « avant », « arrière » et « longitudinal » employés pour décrire la machine à infuser électrique font référence à cette machine à infuser électrique en situation d'usage, lorsqu'elle repose à plat sur un plan de travail.

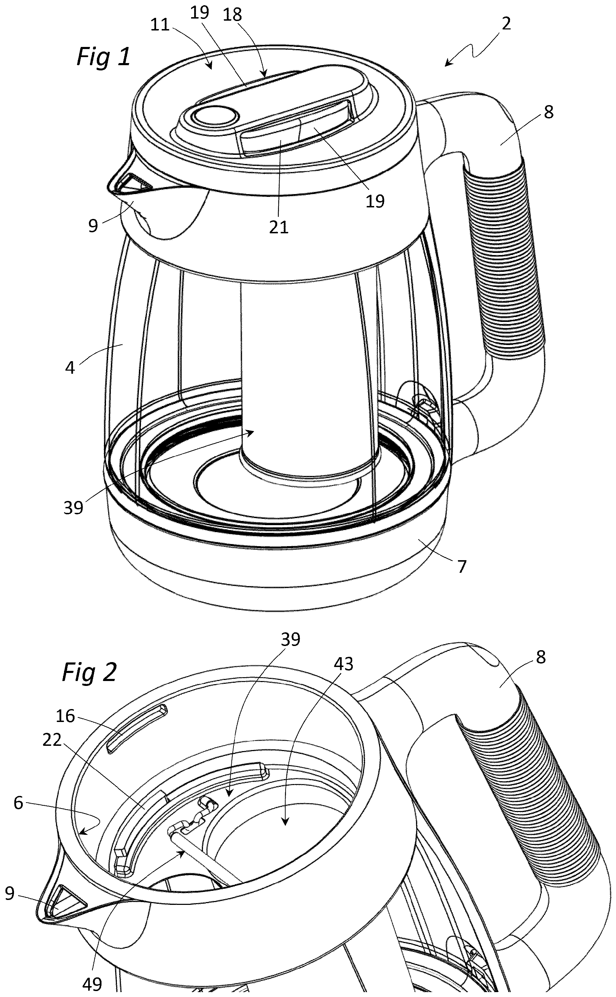

Les figures 1 à 15 représentent une machine à infuser électrique 2, et en particulier une bouilloire électrique, selon l'invention.

Dans la suite de la description, on entend par machine à infuser électrique un dispositif destiné à chauffer de l'eau à une température supérieure à 50°C, de préférence supérieure à 70°C, et permettant d'infuser un produit à infuser.

La machine à infuser électrique 2 comporte une base de support (non représentée sur les figures) configurée pour être alimentée électriquement par un cordon d'alimentation, et un contenant 4 configuré pour reposer sur la base de support.

Le contenant 4 présente un axe longitudinal central A configuré pour s'étendre sensiblement verticalement lorsque le contenant 4 repose sur une surface horizontale. De façon avantageuse, le contenant 4 présente une forme générale de révolution autour de l'axe longitudinal central A.

Le contenant 4 délimite un volume interne 5 destiné à contenir de l'eau et dans lequel l'eau est destinée à être chauffée et notamment portée à ébullition. Le contenant 4 comprend en outre une ouverture de remplissage supérieure 6 débouchant dans le volume interne 5.

Le contenant 4 comporte de plus un fond chauffant 7 situé sous le volume interne 5 et configuré pour chauffer l'eau contenue dans le volume interne 5. De façon connue, le fond chauffant 7 loge un élément électrique chauffant configuré pour être alimenté électriquement lorsque le contenant 4 repose sur la base de support.

La machine à infuser électrique 2 comporte en outre une poignée de préhension 8 fixée au contenant 4, et un bec verseur 9 situé à l'opposé de la poignée de préhension 8 par rapport à l'axe longitudinal central A du contenant 4. Le bec verseur 9 peut par exemple être prévu sur le contenant 4 et être situé au niveau de l'ouverture de remplissage supérieure 6.

La machine à infuser électrique 2 comporte en outre un couvercle 11 configuré pour occuper une position de fermeture dans laquelle le couvercle 11 ferme le contenant 4, et plus particulièrement l'ouverture de remplissage supérieure 6. Le couvercle 11 est pourvu d'une face inférieure 12 configurée pour être située en regard du volume interne 5 du contenant 4. De façon avantageuse, la machine à infuser électrique 2 comporte un joint d'étanchéité annulaire 13 fixé à la face inférieure 12 du couvercle 11 et configuré pour coopérer de manière étanche avec le contenant 4.

La machine à infuser électrique 2 comporte de plus un dispositif de fixation configuré pour fixer de manière amovible, c'est-à-dire de manière temporaire et réversible, le couvercle 11 au contenant 4.

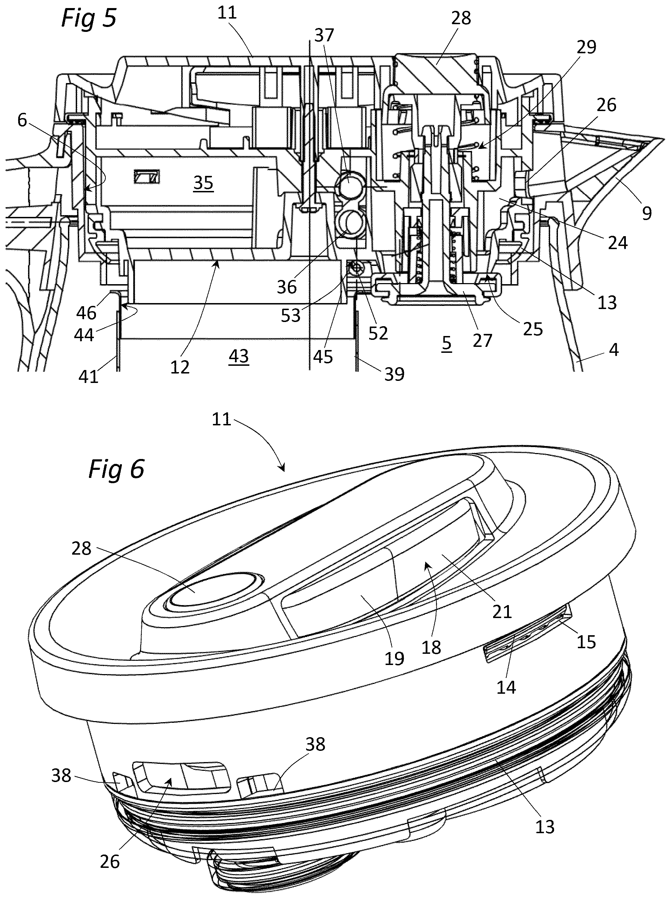

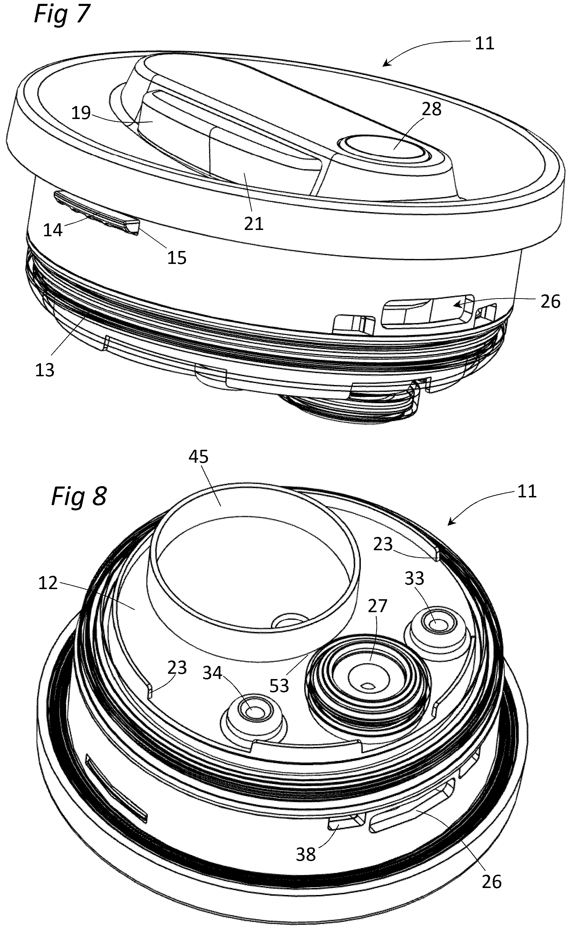

Selon le mode de réalisation représenté sur les figures, le dispositif de fixation comprend deux organes de fixation 14 (voir notamment les figures 6 et 7), tels que des doigts de fixation, prévus sur le couvercle 11 et diamétralement opposés. Chaque organe de fixation 14 est logé dans le couvercle 11 et est configuré pour faire saillie hors du couvercle 11 à travers une ouverture traversante 15 respective prévue sur le couvercle 11. De façon avantageuse, chaque ouverture traversante 15 débouche dans la surface périphérique externe du couvercle 11 et au-dessus du joint d'étanchéité annulaire 13.

Le dispositif de fixation comprend en outre deux éléments de fixation 16 (voir la figure 2), tels que des logements de fixation, prévus sur une surface interne du contenant 4 et situés à proximité de l'ouverture de remplissage supérieure 6. Selon le mode de réalisation représenté sur les figures, les organes de fixation 14 sont plus particulièrement configurés pour respectivement pénétrer dans les éléments de fixation 16 lorsque le couvercle 11 est fixé au contenant 4.

Selon le mode de réalisation représenté sur les figures, les organes de fixation 14 sont montés coulissants par rapport au couvercle 11 selon une direction de coulissement et entre une position de fixation dans laquelle chaque organe de fixation 14 est configuré pour coopérer avec l'élément de fixation 16 respectif de manière à fixer le couvercle 11 au contenant 4, et une position de libération dans laquelle chaque organe de fixation 14 est configuré pour libérer l'élément de fixation 16 respectif de telle sorte que le couvercle 11 peut être retiré du contenant 4. De façon avantageuse, la direction de coulissement s'étend sensiblement radialement par rapport à un axe central du couvercle 11.

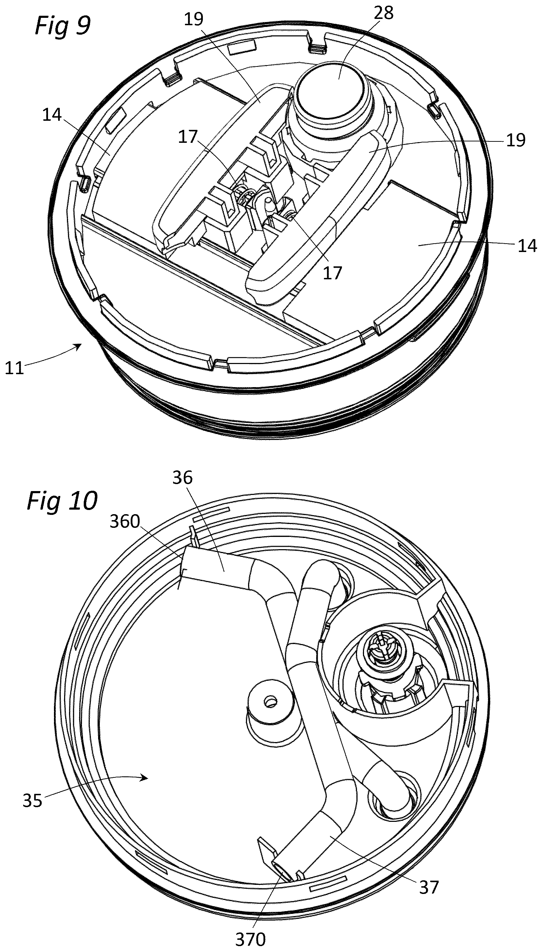

Le dispositif de fixation peut en outre comporter deux organes de rappel 17 (voir la figure 9) logés dans le couvercle 11 et configurés pour rappeler respectivement les organes de fixation 14 dans la position de fixation.

Comme montré plus particulièrement sur les figures 1 et 6, la machine à infuser électrique 2 comporte un mécanisme d'actionnement 18 prévu sur le couvercle 11 et configuré pour déplacer les organes de fixation 14 dans la position de libération lorsque le mécanisme d'actionnement 18 est actionné par un utilisateur.

Le mécanisme d'actionnement 18 comporte plus particulièrement deux organes d'actionnement 19 (voir les figures 1 et 9) qui sont actionnables manuellement par un utilisateur et qui sont configurés pour déplacer les organes de fixation 14 de la position de fixation à la position de libération. Selon le mode de réalisation représenté sur les figures, les organes d'actionnement 19 comportent respectivement deux parties de manipulation 21 qui sont accessibles depuis une face supérieure du couvercle 11 et qui sont configurées pour être manipulées par un utilisateur.

Les organes d'actionnement 19 sont montés coulissants par rapport au couvercle 11 entre une première position d'actionnement et une deuxième position d'actionnement, et les organes d'actionnement 19 et les organes de fixation 14 sont configurés de telle sorte qu'un déplacement des organes d'actionnement 19 de la première position d'actionnement à la deuxième position d'actionnement entraîne un déplacement des organes de fixation 14 de la position de fixation à la position de libération. De façon avantageuse, chaque organe d'actionnement 19 et l'organe de fixation 14 respectif sont fixés l'un à l'autre (et donc solidaire en mouvement), et les deux organes d'actionnement 19 sont configurés pour déplacer les organes de fixation 14 dans la position de libération par pincement des deux parties de manipulation 21, c'est-à-dire par un rapprochement des deux parties de manipulation 21 l'une de l'autre.

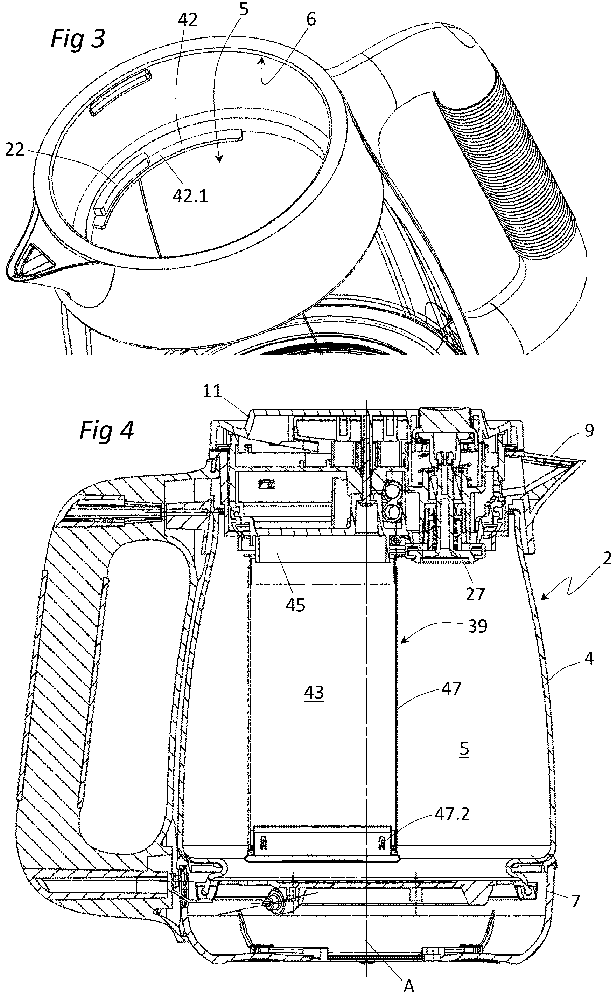

La machine à infuser électrique 2 peut comporter un système d'indexage angulaire configuré pour définir une unique position de fixation du couvercle 11 sur le contenant 4. Le système d'indexage angulaire peut par exemple comporter au moins un bossage d'indexage 22 (voir la figure 3) prévu sur le contenant 4 et au moins une encoche d'indexage 23 (voir la figure 8) prévu sur le couvercle 11 et configuré pour coopérer avec l'au moins un bossage d'indexage 22.

Le couvercle 11 comporte en outre un conduit de versage 24 (voir la figure 5) configuré pour convoyer vers le bec verseur 9 de l'eau contenue dans le volume interne 5. Le conduit de versage 24 comporte plus particulièrement une ouverture d'entrée d'eau 25 débouchant dans une moitié avant de la face inférieure 12 du couvercle 11, et une ouverture de sortie d'eau 26 débouchant dans une surface périphérique externe du couvercle 11 et destinée à être située sensiblement en regard du bec verseur 9 lorsque le couvercle 11 est fixé au contenant 4.

La machine à infuser électrique 2 comprend en outre un obturateur 27 (voir les figures 4, 5 et 8) monté mobile sur le couvercle 11 entre une position d'obturation dans laquelle l'obturateur 27 obture le conduit de versage 24 et empêche un écoulement d'eau à travers le conduit de versage 24, et une position d'ouverture dans laquelle l'obturateur 27 libère le conduit de versage 24 et autorise un écoulement d'eau à travers le conduit de versage 24.

La machine à infuser électrique 2 comporte de plus un système d'actionnement prévu sur le couvercle 11 et configuré pour déplacer l'obturateur 27 entre la position d'ouverture et la position d'obturation. Selon le mode de réalisation représenté sur les figures, le système d'actionnement comporte un bouton d'actionnement 28 actionnable par un utilisateur et mobile entre une première position de bouton et une deuxième position de bouton, le système d'actionnement étant configuré de telle sorte qu'un déplacement, par un utilisateur, du bouton d'actionnement 28 de la première position de bouton à la deuxième position de bouton entraîne un déplacement de l'obturateur 27 de la position d'obturation à la position d'ouverture.

Selon le mode de réalisation représenté sur les figures, le système d'actionnement comporte un dispositif de commande bistable 29, par exemple du type stylo à bille, configuré de telle sorte qu'un déplacement, par un utilisateur, du bouton d'actionnement 28 de la première position de bouton à la deuxième position de bouton entraîne un déplacement de l'obturateur 27 de la position d'obturation à la position d'ouverture, et de telle sorte qu'un déplacement, par un utilisateur, du bouton d'actionnement 28 de la deuxième position de bouton à la première position de bouton entraîne un déplacement de l'obturateur 27 de la position d'ouverture à la position d'obturation. Les première et deuxième positions de bouton correspondent donc à des positions stables du bouton d'actionnement 28.

La machine à infuser électrique 2 comporte également un circuit d'évacuation de vapeur configuré pour convoyer, à l'extérieur du volume interne 5 et par exemple vers l'extérieur de la machine à infuser électrique 2, de la vapeur générée dans le volume interne 5 lors d'une ébullition de l'eau contenue dans le volume interne 5.

Le circuit d'évacuation de vapeur comprend notamment un premier orifice d'admission de vapeur 33 et un deuxième orifice d'admission de vapeur 34 qui sont prévus sur le couvercle 11 et qui débouchent dans la face inférieure 12 du couvercle 11 et à proximité d'un bord périphérique de la face inférieure 12 du couvercle 11. Lorsque le couvercle 11 est fixé au contenant 4 et que ce dernier repose sur une surface horizontale, les premier et deuxième orifices d'admission de vapeur 33, 34 débouchent dans le volume interne 5 délimité par le contenant 4 et au-dessus d'un niveau de remplissage maximal du contenant 4.

Selon le mode de réalisation représenté sur les figures, les premier et deuxième orifices d'admission de vapeur 33, 34 sont disposés de part et d'autre d'un plan vertical médian P de la machine à infuser électrique 2 qui passe par le bec verseur 9 et la poignée de préhension 8, et sont situés dans la moitié avant de la face inférieure 12 du couvercle 11. De façon avantageuse, les premier et deuxième orifices d'admission de vapeur 33, 34 sont disposés de manière symétrique par rapport au plan vertical médian P de la machine à infuser électrique 2.

Comme montré plus particulièrement sur les figures 8, 10, 14 et 15, le circuit d'évacuation de vapeur comprend également :
- une chambre interne 35 délimitée par le couvercle 11,
- un premier conduit d'écoulement de vapeur 36 comprenant une première ouverture d'entrée de vapeur reliée fluidiquement au premier orifice d'admission de vapeur 33 et une première ouverture de sortie de vapeur 360 débouchant dans la chambre interne 35 délimitée par le couvercle 11, et
- un deuxième conduit d'écoulement de vapeur 37 comprenant une deuxième ouverture d'entrée de vapeur reliée fluidiquement au deuxième orifice d'admission de vapeur 34 et une deuxième ouverture de sortie de vapeur 370 débouchant dans la chambre interne 35.

Les premier et deuxième conduits d'écoulement de vapeur 36, 37 forment un dispositif anti-déversement, également nommé dispositif anti-débordement, configuré pour empêcher un déversement de l'eau contenue dans le volume interne 5 via le circuit d'évacuation de vapeur lorsque la machine à infuser électrique 2 est renversée.

Selon le mode de réalisation représenté sur les figures, et notamment comme visible à la figure 5, les premier et deuxième conduits d'écoulement de vapeur 36, 37 sont flexibles et sont logés dans la chambre interne 35. Les premier et deuxième conduits d'écoulement de vapeur 36, 37 peuvent par exemple être formés respectivement par des premier et deuxième tubes d'écoulement de vapeur qui sont avantageusement formés d'un seul tenant et donc monoblocs. Les premier et deuxième conduits d'écoulement de vapeur 36, 37 peuvent par exemple être configurés pour s'étendre sensiblement horizontalement lorsque le contenant 4 repose sur une surface horizontale.

De façon avantageuse, chacun des premier et deuxième conduits d'écoulement de vapeur 36, 37 présente une section transversale qui est circulaire et une section de passage qui est sensiblement constante le long de sa longueur.

Les première et deuxième ouvertures de sortie de vapeur 360, 370 sont plus particulièrement configurées pour être disposées de part et d'autre du plan vertical médian P de la machine à infuser électrique 2, et avantageusement pour être disposées de manière symétrique par rapport au plan vertical médian P de la machine à infuser électrique 2.

Selon le mode de réalisation représenté sur les figures, les première et deuxième ouvertures de sortie de vapeur 360, 370 sont situées dans une moitié arrière de la chambre interne 35, et sont configurées pour être orientées sensiblement à l'opposé du bec verseur 9, c'est-à-dire vers l'arrière de la machine à infuser électrique 2.

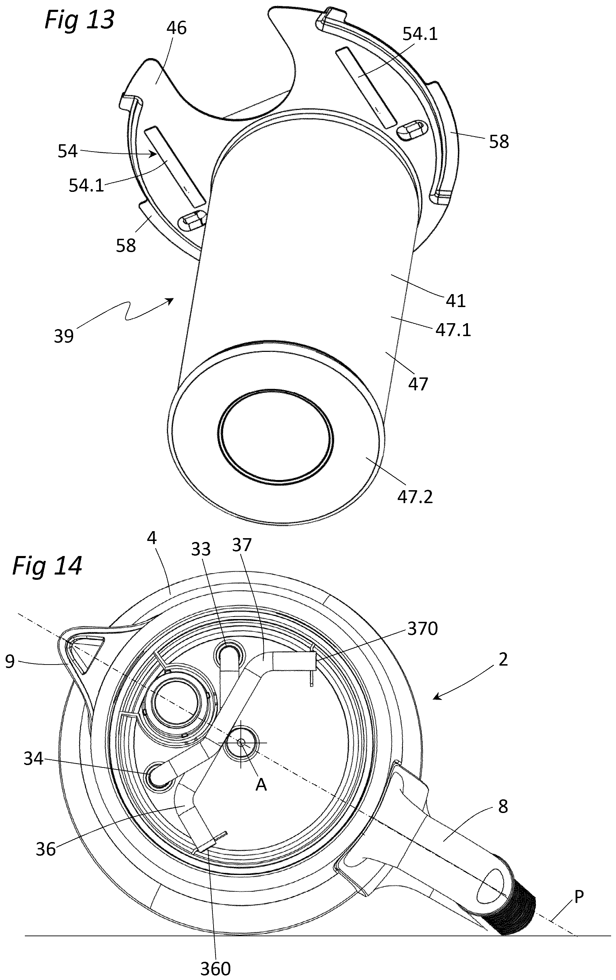

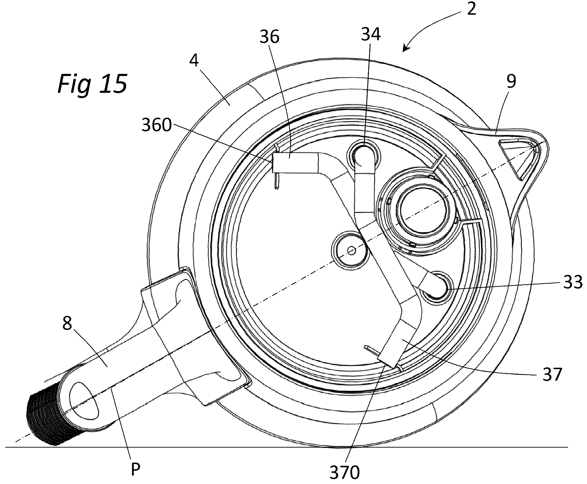

Comme montré plus particulièrement sur les figures 14 et 15, la machine à infuser électrique 2 est plus particulièrement configurée :
- de telle sorte que, lorsque la machine à infuser électrique 2 est renversée et que la poignée de préhension 8 et un premier côté latéral, à savoir le côté gauche, du contenant 4 reposent de manière stable sur une surface horizontale (voir la figure 14), le premier orifice d'admission de vapeur 33 et la deuxième ouverture de sortie de vapeur 370 sont situés au-dessus du niveau d'eau dans le volume interne 5, et
- de telle sorte que, lorsque la machine à infuser électrique 2 est renversée et que la poignée de préhension 8 et un deuxième côté latéral, à savoir le côté droit, du contenant 4 reposent de manière stable sur une surface horizontale (voir la figure 15), le deuxième orifice d'admission de vapeur 34 et la première ouverture de sortie de vapeur 360 sont situés au-dessus du niveau d'eau dans le volume interne 5.

Ainsi, la machine à infuser électrique 2 selon la présente invention permet d'éviter ou du moins de limiter considérablement les risques d'écoulement d'eau bouillante hors de la machine à infuser électrique 2 en cas de renversement de cette dernière, tout en permettant d'optimiser le volume de remplissage maximal du contenant 4.

Le circuit d'évacuation de vapeur comprend de plus plusieurs ouvertures d'évacuation de vapeur 38 prévues sur le couvercle 11 et reliées fluidiquement à la chambre interne 35 délimitée par le couvercle 11. Les ouvertures d'évacuation de vapeur 38 sont configurées pour permettre une évacuation de la vapeur contenue dans la chambre interne 35 vers l'extérieur de la machine à infuser électrique 2.

Selon le mode de réalisation représenté sur les figures, les ouvertures d'évacuation de vapeur 38 débouchent dans une surface périphérique externe du couvercle 11, et sont situées à proximité de l'ouverture de sortie d'eau 26. Les ouvertures d'évacuation de vapeur 38 sont donc configurées pour être situées à proximité du bec verseur 9 lorsque le couvercle 11 est fixé au contenant 4. Une telle configuration de la machine à infuser électrique 2 permet une évacuation de la vapeur hors du contenant 4 via le couvercle 11 et le bec verseur 9.

La machine à infuser électrique 2 comporte en outre un accessoire d'infusion 39, tel qu'un panier à infuser, configuré pour être disposé au moins en partie dans le volume interne 5 du contenant 4, et plus particulièrement pour être au moins en partie immergé dans l'eau contenue dans le volume interne 5. De façon avantageuse, l'accessoire d'infusion 39 est amovible par rapport au contenant 4.

L'accessoire d'infusion 39 comprend un corps principal 41 configuré pour reposer sur une partie de retenue 42 prévue sur le contenant 4 et pour être disposé au moins en partie dans le volume interne 5 du contenant 4. Selon le mode de réalisation représenté sur les figures, la partie de retenue 42 est formée par deux nervures de retenue 42.1 (une seule est visible sur les figures) prévues sur une surface périphérique interne du contenant 4. De façon avantageuse, les nervures de retenue 42.1 sont diamétralement opposées par rapport à l'axe longitudinal central A du contenant 4 et s'étendent circonférentiellement autour de l'axe longitudinal central A. Selon une variante de réalisation de l'invention, les deux nervures de retenue 42.1 pourraient être remplacées par exemple par une nervure de retenue annulaire ou un épaulement de retenue annulaire.

Le corps principal 41 délimite un volume d'infusion 43 configuré pour contenir un produit à infuser, tel que du thé, du café ou des plantes, et comporte une ouverture supérieure 44 à travers laquelle le produit à infuser est apte à être introduit dans le volume d'infusion 43.

Selon le mode de réalisation représenté sur les figures, le couvercle 11 comporte une paroi d'obstruction 45 faisant saillie depuis la face inférieure 12 du couvercle 11 et configurée pour être insérée dans l'ouverture supérieure 44 prévue sur le corps principal 41 de manière à faire obstacle à une sortie du produit à infuser hors du volume d'infusion 43. De façon avantageuse, la paroi d'obstruction 45 présente une forme globalement cylindrique, et présente par exemple une section transversale de forme circulaire.

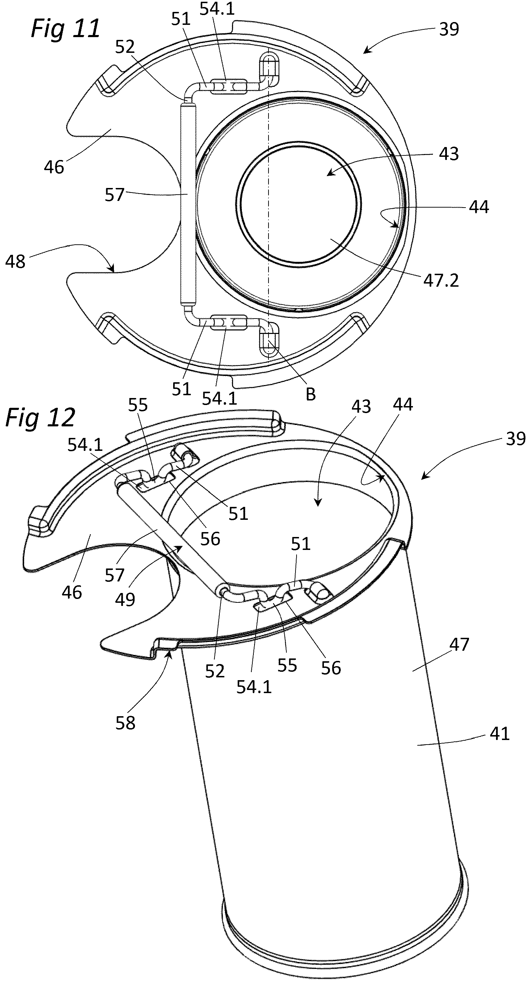

Comme montré sur les figures 11 à 13, le corps principal 41 comporte plus particulièrement une partie d'appui 46 configurée pour reposer sur la partie de retenue 42 prévue sur le contenant 4 et pour être située en regard de la face inférieure 12 du couvercle 11, et une partie d'infusion 47 délimitant le volume d'infusion 43.

Selon le mode de réalisation représenté sur les figures, la partie d'infusion 47 présente une forme globalement cylindrique, et comporte une paroi tubulaire 47.1 de section circulaire et pourvue d'une extrémité supérieure délimitant l'ouverture supérieure 44 et d'une extrémité inférieure opposée à l'extrémité supérieure, et un organe d'obturation 47.2 obturant l'extrémité inférieure de la paroi tubulaire 47.1.

Comme montré sur la figure 12, la partie d'appui 46 est sensiblement plane et est configurée pour s'étendre sensiblement perpendiculairement à l'axe longitudinal central A du contenant 4 lorsque la partie d'appui 46 repose sur la partie de retenue 42. De façon avantageuse, la partie d'appui 46 s'étend au niveau de l'ouverture supérieure 44 du corps principal 41, et au moins en partie autour de l'ouverture supérieure 44.

La partie d'appui 46 comporte de plus une ouverture de passage 48 configurée pour être située en regard de l'obturateur 27 et pour permettre les déplacements de l'obturateur 27 entre la position d'ouverture et la position d'obturation.

Comme montré plus particulièrement sur les figures 2 et 12, l'accessoire d'infusion 39 comporte en outre un dispositif de préhension 49 fixé à une partie supérieure du corps principal 41 et configuré pour permettre à un utilisateur de manipuler l'accessoire d'infusion 39, et par exemple de retirer l'accessoire d'infusion 39 hors du contenant 4.

Selon le mode de réalisation représenté sur les figures, le dispositif de préhension 49 forme une anse de préhension, et comporte deux parties de montage latérales 51 qui sont situées à distance l'une de l'autre et qui sont montées articulées sur le corps principal 41 par l'intermédiaire de deux liaisons pivots définissant un axe d'articulation B, et une partie de préhension 52 qui relie mécaniquement les deux parties de montage latérales 51 l'une à l'autre et qui est configurée pour permettre à un utilisateur de manipuler l'accessoire d'infusion 39.

De façon avantageuse, les deux parties de montage latérales 51 sont montées articulées sur la partie d'appui 46 prévue sur le corps principal 41, et l'axe d'articulation B est configuré pour s'étendre sensiblement perpendiculairement à l'axe longitudinal central A du contenant 4 lorsque l'accessoire d'infusion 39 repose sur la partie de retenue 42. L'axe d'articulation B peut par exemple être configuré pour s'étendre au-dessus et en travers de l'ouverture supérieure 44.

Le dispositif de préhension 49 est ainsi monté articulé par rapport au corps principal 41 autour de l'axe d'articulation B et entre une configuration relevée dans laquelle la partie de préhension 52 est éloignée de la partie d'appui 46 et est apte à être manipulée par un utilisateur, et une configuration abaissée (voir la figure 5) dans laquelle la partie de préhension 52 est rapprochée de la partie d'appui 46, et peut par exemple prendre appui sur la partie d'appui 46.

Selon le mode de réalisation représenté sur les figures, la partie de préhension 52 est configurée pour être décalée par rapport à l'ouverture supérieure 44 lorsque le dispositif de préhension 49 occupe la configuration abaissée, et pour être située en regard de l'ouverture supérieure 44 lorsque le dispositif de préhension 49 occupe la configuration relevée.

Comme montré sur la figure 5, lorsque le couvercle 11 est dans la position de fermeture et que l'accessoire d'infusion 39 repose sur la partie de retenue 42, le couvercle 11 exerce une force d'appui contre le dispositif de préhension 49, et par exemple contre la partie de préhension 52, de manière à maintenir le dispositif de préhension 49 dans la configuration abaissée.

A cet effet, la face inférieure 12 du couvercle 11 comprend une surface d'appui 53 configurée pour exercer une force d'appui sur le dispositif de préhension 49, et plus particulièrement pour déplacer le dispositif de préhension 49 dans la configuration abaissée lorsque le couvercle 11 est déplacé dans la position de fermeture et pour maintenir le dispositif de préhension 49 dans la configuration abaissée tant que le couvercle 11 est fixé au contenant 4.

La surface d'appui 53 peut par exemple être plane et être située à proximité de l'ouverture d'entrée d'eau 25 prévue sur le couvercle 11, et par exemple entre l'ouverture d'entrée d'eau 25 et la paroi d'obstruction 45. De façon avantageuse, la surface d'appui 53 est configurée pour s'étendre sensiblement horizontalement lorsque le contenant 4 repose sur une surface horizontale.

De façon avantageuse, l'accessoire d'infusion 39 comporte en outre un dispositif de sollicitation 54 fixé au corps principal 41 et configuré pour solliciter élastiquement le dispositif de préhension 49 vers la configuration relevée, et plus particulièrement dans une configuration intermédiaire située entre la configuration abaissée et la configuration relevée, lorsque le couvercle 11 est retiré du contenant 4. La présence d'un tel dispositif de sollicitation 54 permet de faciliter la préhension de la partie de préhension 52 par un utilisateur en vue du retrait de l'accessoire d'infusion 39, et également d'éloigner la partie de préhension du volume interne 5 pouvant contenir de l'eau bouillante.

Selon le mode de réalisation représenté sur les figures, le dispositif de sollicitation 54 comporte deux lames élastiquement déformables 54.1 fixées à la partie d'appui 46 et s'étendant en regard d'une face inférieure de la partie d'appui 46. Les deux lames élastiquement déformables 54.1 sont configurées pour coopérer respectivement avec deux parties d'actionnement 55, tels que des doigts d'actionnement ou des ergots d'actionnement, prévues respectivement sur les deux parties de montage latérales 51. De façon avantageuse, les deux lames élastiquement déformables 54.1 sont disposées symétriquement de part et d'autre du plan vertical médian P de la machine à infuser électrique 2, et par exemple sensiblement de part et d'autre de l'ouverture supérieure 44.

Comme montré sur la figure 12, chaque partie d'actionnement 55 est configurée pour pénétrer dans et faire saillie à travers un orifice traversant 56 respectif prévu sur la partie d'appui 46 et pour coopérer avec la face supérieure d'une lame élastiquement déformable 54.1 respective, lorsque le dispositif de préhension 49 est déplacé dans la configuration abaissée.

En variante, le dispositif de sollicitation 54 est fixé au dispositif de préhension 49. Le dispositif de sollicitation 54 comprend par exemple deux lames élastiquement déformables prévues respectivement sur les deux parties de montage latérales 51 et propres à coopérer avec la partie d'appui 46 lorsque le dispositif de préhension 49 est déplacé dans la configuration abaissée.

Plus généralement, le dispositif de sollicitation 54 est propre à être fixé au corps principal 41 ou alternativement au dispositif de préhension 49.

Selon le mode de réalisation représenté sur les figures, le dispositif de préhension 49 comporte de plus un revêtement d'isolation thermique 57, tel qu'un manchon d'isolation thermique, s'étendant autour de la partie de préhension 52. La présence d'un tel revêtement d'isolation thermique 57 limite les risques de brûlure d'un utilisateur lors de la manipulation du dispositif de préhension 49.

Selon le mode de réalisation représenté sur les figures, la machine à infuser électrique 2 comporte en outre un dispositif d'indexage angulaire configuré pour indexer angulairement l'accessoire d'infusion 39 par rapport au contenant 4, de manière à définir une unique position de retenue de l'accessoire d'infusion 39 sur le contenant 4 et donc à assurer une position optimale de l'accessoire d'infusion 39 permettant un déplacement du couvercle 11 dans la position de fermeture.

Comme montré sur les figures 2, 3 et 12, le dispositif d'indexage angulaire comporte au moins un élément d'indexage, qui peut par exemple être formé par les nervures de retenue 42.1, prévu sur le contenant 4, et au moins un organe d'indexage 58, tel qu'un logement d'indexage, prévu sur la partie d'appui 46 et configuré pour coopérer avec l'au moins élément d'indexage lorsque le corps principal 41 repose sur la partie de retenue 42.

Selon un autre mode de réalisation de l'invention non représenté sur les figures, la machine à infuser électrique 2 pourrait comporter un dispositif de contrôle électromécanique comportant un élément bimétallique, et le circuit d'évacuation de vapeur pourrait comporter au moins une ouverture d'évacuation de vapeur 38 qui est configurée pour diriger la vapeur contenue dans la chambre interne 35 vers l'élément bimétallique, le dispositif de contrôle électromécanique étant configuré de telle sorte qu'un afflux de vapeur sur l'élément bimétallique déclenche un arrêt de la chauffe de la machine à infuser électrique 2.

L'élément bimétallique peut par exemple être disposé dans la poignée de préhension 8. Dans ce cas, l'au moins une ouverture d'évacuation de vapeur 38 est prévue dans une partie arrière du couvercle 11 et est configurée pour être orientée vers la poignée de préhension 8.

Selon une variante de réalisation de l'invention, l'élément bimétallique pourrait être disposé dans une partie inférieure du contenant 4. Dans ce cas, l'au moins une ouverture d'évacuation de vapeur 38 est prévue dans une partie arrière du couvercle 11 et est configurée pour être reliée fluidiquement à un tube vapeur qui est agencé dans le contenant 4 et qui est relié fluidiquement à l'élément bimétallique.

Bien entendu, la présente invention n'est nullement limitée aux modes de réalisation décrits et illustrés qui n'ont été donnés qu'à titre d'exemples. Des modifications restent possibles, notamment du point de vue de la constitution des divers éléments ou par substitution d'équivalents techniques, sans sortir pour autant du domaine de protection de l'invention.

## Revendications

1. Machine à infuser électrique (2) comprenant :
- un contenant (4) délimitant un volume interne (5) destiné à contenir de l'eau et dans lequel l'eau est destinée à être chauffée,
- une poignée de préhension (8) fixée au contenant (4),
- un bec verseur (9),
- un accessoire d'infusion (39) comprenant :
∘ un corps principal (41) configuré pour reposer sur une partie de retenue (42) prévue sur le contenant (4) et pour être disposé au moins en partie dans le volume interne (5) du contenant (4), le corps principal (41) délimitant un volume d'infusion (43) configuré pour contenir un produit à infuser, et
∘ un dispositif de préhension (49) fixé à une partie supérieure du corps principal (41) et comprenant une partie de préhension (52) configurée pour permettre à un utilisateur de manipuler l'accessoire d'infusion (39), et
- un couvercle (11) configuré pour occuper une position de fermeture dans laquelle le couvercle (11) ferme le contenant (4) et recouvre au moins en partie l'accessoire d'infusion, le couvercle (11) comprenant une face inférieure (12) configurée pour être située en regard de l'accessoire d'infusion (39),
**caractérisée en ce que** le dispositif de préhension (49) est monté mobile par rapport au corps principal (41) entre une configuration relevée dans laquelle la partie de préhension (52) est apte à être manipulée par un utilisateur et une configuration abaissée, et **en ce que**, lorsque le couvercle (11) est dans la position de fermeture, le couvercle (11) est configuré pour exercer une force d'appui contre le dispositif de préhension (49), de manière à maintenir le dispositif de préhension (49) dans la configuration abaissée.

2. Machine à infuser électrique (2) selon la revendication 1, dans laquelle l'accessoire d'infusion (39) comporte un dispositif de sollicitation (54) configuré pour solliciter élastiquement le dispositif de préhension (49) vers la configuration relevée.

3. Machine à infuser électrique (2) selon la revendication 2, dans laquelle le dispositif de sollicitation (54) comporte au moins une lame élastiquement déformable (54.1) fixée au corps principal (41).

4. Machine à infuser électrique (2) selon l'une quelconque des revendications 1 à 3, dans laquelle le corps principal (41) comporte une partie d'appui (46) configurée pour reposer sur la partie de retenue (42) prévue sur le contenant (4), la partie de préhension (52) étant configurée pour être éloignée de la partie d'appui (46) lorsque le dispositif de préhension (49) occupe la configuration relevée et pour être rapprochée de la partie d'appui (46) lorsque le dispositif de préhension (49) occupe la configuration abaissée.

5. Machine à infuser électrique (2) selon la revendication 4, dans laquelle le dispositif de préhension (49) est monté mobile sur la partie d'appui (46).

6. Machine à infuser électrique (2) selon l'une quelconque des revendications 1 à 5, dans laquelle la face inférieure (12) du couvercle (11) comprend une surface d'appui (53) configurée pour exercer une force d'appui sur le dispositif de préhension (49) lorsque le couvercle (11) est dans la position de fermeture, de manière à maintenir le dispositif de préhension (49) dans la configuration abaissée.

7. Machine à infuser électrique (2) selon l'une quelconque des revendications 1 à 6, dans laquelle le dispositif de préhension (49) comporte deux parties de montage latérales (51) qui sont situées à distance l'une de l'autre et qui sont montées mobiles sur le corps principal (41), la partie de préhension (52) reliant les deux parties de montage latérales (51) l'une à l'autre.

8. Machine à infuser électrique (2) selon l'une quelconque des revendications 1 à 7, dans laquelle le dispositif de préhension (49) est monté articulé par rapport au corps principal (41) autour d'un axe d'articulation (B) et entre la configuration abaissée et la configuration relevée.

9. Machine à infuser électrique (2) selon la revendication 8, dans laquelle l'axe d'articulation (B) est configuré pour s'étendre sensiblement perpendiculairement à un axe longitudinal central (A) du contenant (4) lorsque l'accessoire d'infusion (39) repose sur la partie de retenue (42).

10. Machine à infuser électrique (2) selon l'une quelconque des revendications 1 à 9, dans laquelle le dispositif de préhension (49) comporte un revêtement d'isolation thermique s'étendant autour de la partie de préhension (52).

11. Machine à infuser électrique (2) selon l'une quelconque des revendications 1 à 10, dans laquelle le couvercle (11) comporte une paroi d'obstruction (45) faisant saillie depuis la face inférieure (12) du couvercle (11) et configurée pour être insérée dans une ouverture supérieure (44) prévue sur le corps principal (41) de manière à faire obstacle à une sortie du produit à infuser hors du volume d'infusion (43).

12. Machine à infuser électrique (2) selon l'une quelconque des revendications 1 à 11, dans laquelle l'accessoire d'infusion (39) est amovible par rapport au contenant (4).

13. Machine à infuser électrique (2) selon l'une quelconque des revendications 1 à 12, laquelle comporte un dispositif d'indexage angulaire configuré pour indexer angulairement l'accessoire d'infusion (39) par rapport au contenant (4), de manière à définir une unique position de retenue de l'accessoire d'infusion (39) sur le contenant (4).

14. Machine à infuser électrique (2) selon l'une quelconque des revendications 1 à 13, laquelle comporte un circuit d'évacuation de vapeur configuré pour convoyer, à l'extérieur du volume interne (5), de la vapeur générée dans le volume interne (5) lors d'une ébullition de l'eau contenue dans le volume interne (5).

15. Machine à infuser électrique (2) selon la revendication 14, dans laquelle le circuit d'évacuation de vapeur comporte :
- un premier orifice d'admission de vapeur (33) et un deuxième orifice d'admission de vapeur (34) qui sont prévus sur le couvercle (11) et qui débouchent dans la face inférieure (12) du couvercle (11), les premier et deuxième orifices d'admission de vapeur (33, 34) étant configurés pour être reliés fluidiquement au volume interne (5) délimité par le contenant (4), et pour être disposés de part et d'autre d'un plan vertical médian (P) de la machine à infuser électrique (2) qui passe par la poignée de préhension (8),
- une chambre interne (35) délimitée par le couvercle (11), et
- un premier conduit d'écoulement de vapeur (36) comprenant une première ouverture d'entrée de vapeur reliée fluidiquement au premier orifice d'admission de vapeur (33) et une première ouverture de sortie de vapeur (360) débouchant dans la chambre interne (35), et un deuxième conduit d'écoulement de vapeur (37) comprenant une deuxième ouverture d'entrée de vapeur reliée fluidiquement au deuxième orifice d'admission de vapeur (34) et une deuxième ouverture de sortie de vapeur (370) débouchant dans la chambre interne (35).
